# FASCICULE DE BREVET EUROPEEN

(11) **EP 4 304 932 B1**
(45) Date de publication et mention de la délivrance du brevet: **23.04.2025**
(21) Numéro de dépôt: 22712976.4
(22) Date de dépôt: 07.03.2022
(51) Int. Cl.: B64C 11/38

(54) **DISPOSITIF DE CALAGE DE PAS DE PALES POUR TURBOMACHINE ET TURBOMACHINE LE COMPORTANT**
BLATTVERSTELLUNGSMECHANISMUS FÜR TURBOMASCHINE SOWIE MIT DIESEM MECHANISMUS AUSGESTATTETE TURBOMASCHINE
PITCH CHANGING MECHANISM FOR TURBOMACHINE AND TURBOMACHINE EQUIPPED THEREWITH

(30) Priorité: 09.03.2021 FR 2102303
(43) Date de publication de la demande: 17.01.2024
(73) Titulaire: SAFRAN AIRCRAFT ENGINES, 75015 Paris (FR)
(72) Inventeur: ORIOL, Sébastien, 77550 MOISSY-CRAMAYEL (FR); FRANTZ, Caroline Marie, 77550 MOISSY-CRAMAYEL (FR); VERDIER, Bastien Pierre, 77550 MOISSY-CRAMAYEL (FR)
(74) Mandataire: Gevers & Orès
(86) Numéro de dépôt international: PCT/FR2022/050407
(87) Numéro de publication internationale: WO 2022/189746

(56) Documents cités:
- EP-A1- 1 306 558
- EP-A2- 2 479 429
- WO-A1-2020/074816
- GB-A- 2 071 781

## Description

### DOMAINE TECHNIQUE

La présente invention concerne un dispositif de calage de pas de pales d'une hélice ou soufflante de turbomachine, notamment d'aéronef, et une turbomachine le comportant.

### TECHNIQUE ANTÉRIEURE

L'arrière-plan technique comprend notamment le document GB 2 071 781 A.

Une turbomachine d'aéronef peut comprendre un rotor muni de pales à calage variable c'est à dire des pales dont le calage (et plus précisément l'angle de calage) est réglable en fonction des paramètres de vol, de manière à optimiser le fonctionnement de la turbomachine. Pour rappel, l'angle de calage d'une pale correspond à l'angle, dans un plan longitudinal perpendiculaire à l'axe de rotation de la pale, entre la corde de la pale et le plan de rotation de la soufflante.

Une telle turbomachine comprend un dispositif de commande du calage des pales, ou dispositif de calage des pales. Le dispositif de calage comprend généralement un actionneur commun à toutes les pales et un mécanisme propre à chacune des pales, ce mécanisme étant configuré pour transformer le mouvement initié par l'actionneur en un mouvement rotatif de la pale correspondante. L'actionneur peut être un actionneur hydraulique ou un actionneur électrique.

Un tel actionneur hydraulique est alimenté par une source d'alimentation en fluide sous pression tel que de l'huile afin de lui fournir l'énergie hydraulique nécessaire à son fonctionnement. Selon certaines architectures, la source d'alimentation en fluide est solidaire de la structure fixe de la turbomachine, autrement dit placée dans un repère fixe, tandis que l'actionneur est solidaire du rotor, autrement dit placé dans un repère tournant. Le dispositif de commande du calage comprend alors un palier de transfert d'huile tournant ou joint tournant (plus connu sous l'acronyme OTB pour « Oil Transfert Bearing » permettant de transférer l'énergie hydraulique depuis le repère fixe jusqu'au repère tournant.

Pour être certifiée, une telle turbomachine doit en outre comprendre un dispositif de mise en drapeau des pales c'est-à-dire un dispositif permettant de positionner les pales dans une position dans laquelle ces dernières sont effacées au mieux par rapport à la direction d'avance. Généralement, en position drapeau, l'angle de calage des pales est de 90°. Les pales sont par exemple mises en position drapeau lors d'une défaillance (ou panne) du dispositif de commande du calage des pales (par exemple une défaillance de la chaîne d'alimentation hydraulique) afin que ces dernières offrent le moins de résistance (traînée) possible. Ces défaillances peuvent survenir dans n'importe quelle phase de fonctionnement du moteur. Dans cette situation, il est indispensable de placer le fan dans sa position de sécurité pour éviter des conséquences moteur ou avion potentiellement catastrophiques.

De manière traditionnelle, le dispositif de mise en drapeau comprend par exemple, pour chaque pale, un contrepoids lié directement ou via un mécanisme à engrenages au pivot de la pale. Dans l'exemple précité, chaque contrepoids est en l'occurrence apte, sous l'effet centrifuge, à être déplacé dans une position de référence dans laquelle il impose une position drapeau à la pale correspondante.

Toutefois, les contrepoids représentent une masse importante. D'autre part, ces derniers présentent également le désavantage d'être encombrants. En effet, ils font parties intégrantes du rotor mobile en rotation, il est ainsi nécessaire de dimensionner en conséquence les moyens de guidage du rotor ainsi que la structure du stator.

Alternativement, la fonction de mise en drapeau peut être réalisée par l'ajout d'une pompe commandée électriquement agencée dans le repère fixe. Néanmoins, une telle pompe est incompatible avec une architecture comportant un palier de transfert d'huile tournant. En effet, en cas de panne intervenant sur le palier de transfert d'huile tournant, l'actionneur hydraulique n'est plus alimenté en huile et la remise en drapeau des pales est impossible.

L'objectif de la présente invention est ainsi de proposer un dispositif de calage des pales robuste et optimisé en terme de masse et d'encombrement permettant de remédier aux inconvénients précités, et notamment permettant une mise en drapeau des pales fiable, robuste et rapide, même en cas de panne intervenant sur le palier de transfert d'huile tournant.

### RÉSUMÉ DE L'INVENTION

À cet effet, l'invention propose un dispositif de calage de pas de pales pour turbomachine d'aéronef, comprenant :
- un arbre s'étendant selon un axe longitudinal X de la turbomachine, des pales étant montées sur l'arbre ;
- un mécanisme de liaison relié aux pales de l'arbre ;
- un système de commande agissant sur le mécanisme de liaison et comportant un corps fixe solidaire de l'arbre et un corps mobile en translation selon l'axe longitudinal X par rapport audit corps fixe et séparant le corps fixe en deux chambres à volumes variables, le corps mobile étant relié au mécanisme de liaison ;
- un moyen d'alimentation du système de commande configuré pour alimenter les chambres en fluide sous pression et pour être relié à une source d'alimentation principale en fluide sous pression agencée dans un repère fixe de la turbomachine,
   le moyen d'alimentation étant configuré pour être couplé à un palier de transfert de fluide configuré pour transférer le fluide sous pression de la source d'alimentation principale vers chacune des chambres du système de commande agencé dans un repère tournant de la turbomachine via le moyen d'alimentation.

Selon l'invention, le dispositif de calage de pas comporte un circuit d'alimentation auxiliaire en fluide sous pression agencé dans le repère tournant, relié au moyen d'alimentation et configuré pour recevoir temporairement du fluide sous pression de la source d'alimentation principale et en ce que le moyen d'alimentation est configuré pour :
- en fonctionnement normal, autoriser le passage de fluide sous pression de la source d'alimentation principale vers les chambres du système de commande de manière à régler le calage de pas des pales et autoriser le passage de fluide sous pression de la source d'alimentation principale vers le circuit d'alimentation auxiliaire, et
- en cas de rupture de l'alimentation des chambres en fluide sous pression par la source d'alimentation principale, autoriser le passage de fluide sous pression du circuit d'alimentation auxiliaire vers les chambres du système de commande de manière à entrainer la mise en drapeau des pales.

En outre, le moyen d'alimentation comporte un distributeur à tiroir agencé dans le repère tournant et commandé par une commande hydraulique 54 et le distributeur à tiroir étant configuré pour être relié au palier de transfert de fluide, et relié au circuit d'alimentation auxiliaire et à au moins une des chambres du système de commande, le distributeur à tiroir pouvant occuper au moins deux positions :
- dans une première position (A), le distributeur à tiroir autorise le passage du fluide de la source d'alimentation principale vers la ou chaque chambre reliée au distributeur à tiroir de manière à régler le calage de pas des pales et bloque le passage du fluide du circuit d'alimentation auxiliaire vers la ou chaque chambre reliée au distributeur à tiroir ; et
- dans une seconde position (B), le distributeur à tiroir bloque le passage du fluide de la source d'alimentation principale en fluide vers la ou chaque chambre reliée au distributeur à tiroir et autorise le passage du fluide du circuit de fluide auxiliaire vers au moins une chambre reliée au distributeur à tiroir de manière à entrainer la mise en drapeau des pales.

Par « temporairement », on entend au sens de l'invention, que le circuit d'alimentation auxiliaire est configuré pour recevoir du fluide sous pression de la source d'alimentation principale lorsque la source d'alimentation principale est active et que le palier de transfert de fluide ou joint tournant est opérationnel. Ainsi, dès que la source d'alimentation principale génère de la pression et que le palier de transfert de fluide ne présente aucune anomalie, le circuit d'alimentation auxiliaire se remplit et est prêt à être utilisé en cas de rupture de l'alimentation des chambres en fluide sous pression par la source d'alimentation principale. Une telle architecture du dispositif de commande de calage des pales permet avantageusement une mise en drapeau des pales de l'hélice passive en cas de perte de la fonction principale d'actionnement de pas. En effet, l'invention propose d'utiliser uniquement des éléments passifs au plus près de l'actionneur pour réaliser la mise en drapeau des pales en cas de perte de l'énergie hydraulique principale d'actionnement. Elle est uniquement régie par les pressions hydrauliques du dispositif.

L'invention permet de stocker l'énergie hydraulique nécessaire pour une remise en drapeau des pales au plus près de l'actionneur dans le circuit d'alimentation auxiliaire et de la restituer en cas de perte hydraulique de la fonction principale d'actionnement. L'énergie hydraulique étant stockée au plus près de l'actionneur, c'est-à-dire dans le repère tournant, la mise en drapeau des pales est assurée même en cas de casse du palier de transfert de fluide tournant.

Le dispositif de calage selon l'invention peut comprendre les caractéristiques additionnelles telles qu'identifiées dans les revendications dépendantes.

**En** fonctionnement normal, le débit de fluide sous pression alimentant les chambres du système de commande peut être contrôlé par une unité de contrôle agencée dans le repère fixe et reliant la source d'alimentation principale au palier de transfert de fluide.

Le moyen d'alimentation peut comporter une canalisation auxiliaire reliant les deux chambres du système de commande, le distributeur à tiroir étant configuré pour autoriser le passage du fluide d'une chambre à l'autre lorsqu'il est dans la première position A et bloquer le passage du fluide d'une chambre à l'autre lorsqu'il est dans la seconde position B.

Selon un premier mode de réalisation, le circuit d'alimentation auxiliaire comporte un accumulateur agencé dans le repère tournant et configuré pour stocker du fluide provenant de la source d'alimentation principale au cours du fonctionnement normal et, en cas de rupture de l'alimentation des chambres en fluide sous pression par la source d'alimentation principale, le moyen d'alimentation est configuré pour décharger le fluide stocké dans l'accumulateur vers une des chambres du système de commande de manière à entrainer la mise en drapeau des pales.

Un tel dispositif permet une mise en drapeau à partir d'un système hydraulique entièrement passif qui reste opérationnel même en cas de perte du transfert d'huile tournant.

En effet, l'accumulateur permet de stocker de l'énergie hydraulique au plus près de l'actionneur et de la restituer en cas de perte hydraulique de la fonction principale d'actionnement de pas pour emmener les pales en drapeau.

Un tel circuit d'alimentation auxiliaire est réutilisable plusieurs fois. En effet, si la baisse de pression d'actionnement n'est que temporaire, au retour de la haute pression, le système se réarme immédiatement en prélevant à nouveau une partie du débit de la source d'alimentation principale.

Même si les accumulateurs sont réputés pour être des éléments lourds, ils le sont bien moins qu'un système de remise en drapeau classique par contrepoids. En outre, un ensemble de petits accumulateurs hydrauliques judicieusement répartis dans le repère tournant permet de faciliter son intégration.

De préférence, le palier de transfert de fluide comporte deux voies de transfert pour transférer le fluide sous pression de la source d'alimentation principale vers chacune des chambres du système de commande et une troisième voie de transfert pour transférer le fluide sous pression de la source d'alimentation principale vers l'accumulateur en fonctionnement normal.

Le moyen d'alimentation comporte avantageusement une canalisation reliant directement une des chambres à une voie de transfert du palier de transfert de fluide et une autre canalisation reliant l'autre des chambres à une autre voie de transfert du palier de transfert par l'intermédiaire du distributeur à tiroir.

De préférence, le circuit d'alimentation auxiliaire comporte un dispositif anti-retour, par exemple un clapet anti-retour, agencé entre l'accumulateur et le palier de transfert de fluide.

Selon un deuxième mode de réalisation, le circuit d'alimentation auxiliaire comporte une pompe hydraulique agencée dans le repère tournant et configurée pour être reliée aux deux chambres en cas de rupture de l'alimentation des chambres en fluide sous pression par la source d'alimentation principale, et transmettre le fluide d'une chambre à l'autre de manière à entrainer la mise en drapeau des pales.

Un tel dispositif permet également une mise en drapeau à partir d'un système hydraulique entièrement passif qui reste opérationnel même en cas de perte du transfert d'huile tournant.

En effet, la pompe agencée dans le repère tournant au plus près de l'actionneur permet de stocker de l'énergie hydraulique dans le circuit d'alimentation auxiliaire et de la restituer en cas de perte hydraulique de la fonction principale d'actionnement de pas pour emmener les pales en drapeau.

En outre, un tel dispositif n'utilise pas d'énergie électrique et l'énergie hydraulique est avantageusement directement générée dans le repère tournant.

De plus, un tel circuit d'alimentation auxiliaire est réutilisable plusieurs fois étant donné que la pompe est continuellement entrainée en rotation.

En outre, la pompe hydraulique peut directement être entrainée par l'arbre de la soufflante ou de l'hélice dans le repère tournant.

De plus, une pompe hydraulique est beaucoup plus légère qu'un système de remise en drapeau classique par contrepoids.

De préférence, le distributeur à tiroir est configuré lorsqu'il est dans :
- la première position A, pour relier chaque chambre à une voie de transfert du palier de transfert de fluide et pour relier la sortie de la pompe hydraulique à l'entrée de la pompe hydraulique ; et
- la seconde position B, pour relier la sortie de la pompe hydraulique à une des chambres et relier l'autre des chambres à l'entrée de la pompe hydraulique.

Avantageusement, le circuit d'alimentation auxiliaire comporte un canal de dérivation reliant une des voies de transfert du palier de transfert à l'entrée de la pompe hydraulique et dans lequel est monté un dispositif anti-retour, par exemple un clapet anti-retour.

En outre, le circuit d'alimentation auxiliaire peut comporter un autre canal de dérivation reliant directement l'entrée de la pompe hydraulique à la sortie de la pompe hydraulique dans lequel est monté un dispositif anti-retour comportant un organe d'ouverture et de fermeture du passage de fluide dans la conduite de dérivation actionné par un ressort. Un tel dispositif anti-retour permet avantageusement de protéger la pompe des surpressions éventuelles.

De plus, une première des chambres peut avoir un volume réduit par rapport à l'autre en fonctionnement normal. Dans ce cas, le circuit d'alimentation auxiliaire peut comporter un accumulateur hydraulique relié à la pompe hydraulique, l'accumulateur hydraulique ayant un volume sensiblement égal à la différence de volumes entre les deux chambres.

Un autre objet de l'invention concerne une turbomachine, notamment d'aéronef, comportant une hélice ou une soufflante comprenant des pales à calage variable et un dispositif de calage de pas des pales selon l'invention.

De préférence, la turbomachine est un turboréacteur à soufflante variable ou un turbopropulseur à hélice variable.

### BRÈVE DESCRIPTION DES DESSINS

La présente invention sera mieux comprise et d'autres détails, caractéristiques et avantages de la présente invention apparaîtront plus clairement à la lecture de la description d'exemples non limitatifs qui suit, en référence aux dessins annexés sur lesquels :
[Fig. 1] la figure 1, est une vue schématique en demi-coupe axiale (ou longitudinale) d'une turbomachine d'aéronef partiellement représentée à laquelle s'applique l'invention ;
[Fig. 2] la figure 2, est une vue schématique d'un circuit de commande et d'alimentation en fluide sous pression des chambres d'un actionneur hydraulique selon un premier mode de réalisation de l'invention en fonctionnement normal,
[Fig. 3] la figure 3 représente une vue schématique sous pression des chambres de l'actionneur hydraulique selon le premier mode de réalisation de l'invention en cas de coupure de l'alimentation principale,
[Fig. 4] la figure 4, est une vue schématique d'une amélioration du circuit de commande et d'alimentation en fluide de la figure 2,
[Fig. 5] la figure 5, est une vue schématique d'un circuit de commande et d'alimentation en fluide sous pression des chambres d'un actionneur hydraulique selon un deuxième mode de réalisation de l'invention en fonctionnement normal, et
[Fig. 6] la figure 6 représente une vue schématique sous pression des chambres de l'actionneur hydraulique selon le deuxième mode de réalisation de l'invention en cas de coupure de l'alimentation principale.

Les éléments ayant les mêmes fonctions dans les différentes mises en œuvre ont les mêmes références dans les figures.

### DESCRIPTION DES MODES DE RÉALISATION

L'invention s'applique à toute turbomachine équipée d'au moins une soufflante carénée ou non carénée et dont les pales d'hélice (dans le cas d'une soufflante non carénée) ou les aubes de soufflante (dans le cas d'une soufflante carénée) sont équipées d'un dispositif de calage de pas.

En particulier, l'invention s'applique à un turboréacteur à soufflante variable ou à un turbopropulseur à hélice variable.

Dans la suite de la description, on parlera d'hélice et de pales d'hélice indifféremment du fait que l'invention s'applique à une turbomachine à soufflante non carénée ou à une turbomachine à soufflante carénée (auquel l'hélice correspond à la soufflante et les pales d'hélice aux aubes de soufflante).

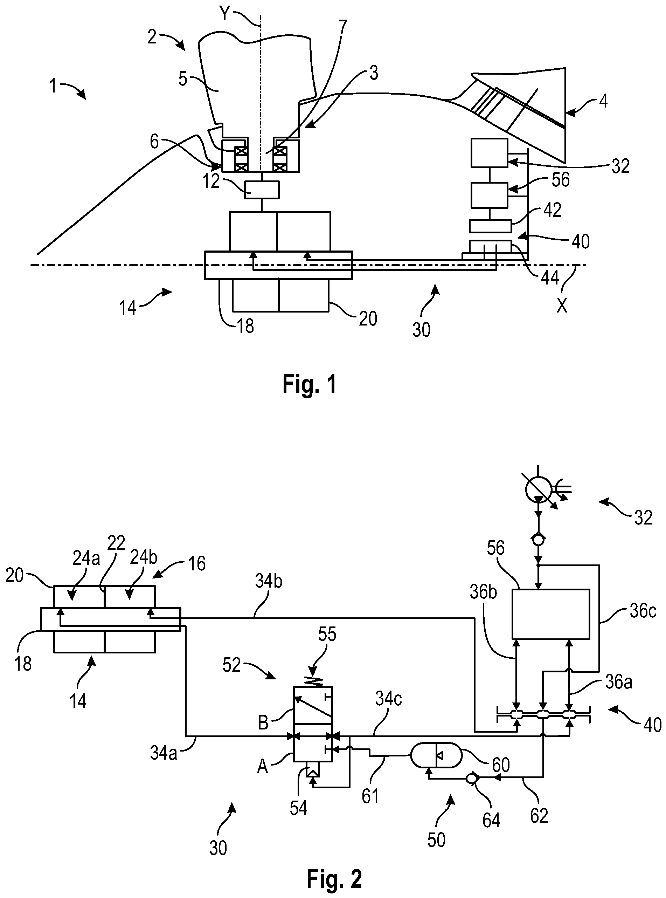

Sur la figure 1 est représentée partiellement une turbomachine 1 d'aéronef à laquelle s'applique l'invention. La turbomachine présente un axe longitudinal X comprenant une hélice 2 en rotation autour d'un arbre s'étendant le long de l'axe longitudinal X. L'hélice 2 comporte un rotor 3 mobile (autour de l'axe X) par rapport à une structure fixe 4. Le rotor 3 porte une série de pales à calage variable 5. Notamment, le rotor 3 comprend un anneau de support 6 des pales 5. Chaque pale 5 comprend un pied 7 monté dans un logement de l'anneau 6 de sorte que la pale 5 soit mobile en rotation autour d'un axe Y sensiblement perpendiculaire à l'axe X.

Dans l'exemple illustré, l'hélice 2 est placée en amont d'un générateur de gaz comportant par exemple un compresseur basse pression, un compresseur haute pression, une chambre de combustion, une turbine haute pression et une turbine basse pression. Bien entendu, l'invention s'applique également au cas des turbomachines ayant une soufflante non carénée également appelée « open rotor » en anglais dans lesquelles une hélice est placée en aval d'un générateur de gaz.

Par convention, dans la présente demande, les termes « amont » et « aval » sont définis par rapport au sens de circulation des gaz dans la turbomachine 1. De même, par convention dans la présente demande, les termes « interne », « externe », « intérieur » et « extérieur » sont définis radialement par rapport à l'axe longitudinal X de la turbomachine 1, qui est notamment l'axe de rotation des rotors des compresseurs et turbines.

Le rotor 3 est guidé en rotation par rapport à la structure fixe 4 de la turbomachine 1 définissant un repère tournant. Ainsi, tout élément solidaire du rotor 3 est dit placé dans le repère tournant. Au contraire, tout élément solidaire de la structure fixe de la turbomachine est placée dans un repère fixe.

La turbomachine 1 comprend un dispositif de calage de pas d'au moins une pale 5.

Le dispositif de calage de pas comprend un mécanisme de liaison 12 relié aux pales de l'hélice et un système de commande 14 agissant sur le mécanisme de liaison 12. Le système de commande 14 est solidaire en rotation de l'arbre portant les pales, autrement dit placé dans le repère tournant. Avantageusement, mais non limitativement, le moyen de commande 14 comprend un actionneur 16 annulaire linéaire d'axe coaxial à l'axe longitudinal X. Le mécanisme de liaison 12 permet de transformer le mouvement initié par l'actionneur en un mouvement de rotation des pales 5.

L'actionneur 16 est un actionneur hydraulique. Dans ce cas, l'énergie à transporter jusqu'à l'actionneur est de l'énergie hydraulique, et autrement dit un liquide sous pression tel que de l'huile.

Selon les modes de réalisation illustrés sur les figures 2 à 5, l'actionneur 16 comporte un corps fixe 18 solidaire en rotation de l'arbre 3 et un corps mobile 20 en translation par rapport au corps fixe 18 le long de l'axe longitudinal X.

En d'autres termes, dans la présente demande, le corps fixe 18 de l'actionneur fait référence au corps de l'actionneur 16 lié à l'arbre 3 de l'hélice, ou arbre fan, tandis que le corps mobile 20 de l'actionneur fait référence au corps de l'actionneur 16 lié aux pales 5 de l'hélice, également appelées aubes fan.

Le corps fixe 18 est cylindrique, d'axe longitudinal X, de section circulaire. Il comporte une paroi 21 annulaire fixée à l'arbre 3 de l'hélice. La masse du dispositif de calage de pas est ainsi mieux répartie améliorant le comportement dynamique du rotor de l'hélice ou de la soufflante. Le corps mobile 20 est relié au mécanisme de liaison 12 de sorte que le déplacement du corps mobile 20 suivant l'axe longitudinal agit sur le mécanisme de liaison 12 entraînant le pivotement des pales 5 autour de l'axe de calage Y et ainsi le calage des pales 5. Le mécanisme de liaison 12 comprend par exemple, pour chaque pale, une manivelle présentant une première extrémité centrée sur l'axe Y et couplée en rotation avec la pale correspondante et une seconde extrémité excentrée par rapport à l'axe Y et solidaire de l'élément mobile de l'actionneur 16. La manivelle permet de démultiplier l'effort nécessaire pour régler le calage de la pale correspondante.

Ainsi, les pales 5 et l'arbre 3 de l'hélice sont mobiles en rotation par rapport au carter 4 de la turbomachine 1 par le déplacement en translation du corps mobile 20 de l'actionneur 16 par rapport au carter 4 de la turbomachine 1 via le mécanisme de liaison 12.

Le corps fixe 18 comprend également une paroi radiale 22 délimitant ici deux chambres 24a, 24b à volume variable dans le corps mobile 20 et qui sont opposées axialement. La paroi radiale 22 s'étend depuis une face radialement externe de la paroi annulaire 21, vers l'extérieur. Le corps mobile 20 est agencé autour du corps fixe 18 et est coaxial avec l'axe longitudinal X. Celui-ci se déplace axialement sous l'action d'une commande du dispositif de calage.

Pour cela, le dispositif de calage comprend un moyen d'alimentation fluidique 30 assurant la commande de celui-ci.

La première chambre 24a et la deuxième chambre 24b sont chacune destinées à recevoir un fluide, par exemple hydraulique sous pression, d'une source d'alimentation principale 32 en fluide sous pression agencée dans le repère fixe de la turbomachine 1. En d'autres termes, la turbomachine 1 comporte la source d'alimentation principale 32 qui est agencée dans une nacelle fixe de la turbomachine d'aéronef.

De préférence, mais non limitativement, l'actionneur est un vérin hydraulique annulaire. Le vérin est constitué de sa tige fixe solidaire de l'arbre de soufflante et d'un cylindre mobile par rapport à la tige. La tige est formée par le corps fixe 18 tandis que le cylindre est formé par le corps mobile 20.

En référence aux figures 2 à 6, le moyen d'alimentation fluidique 30 du dispositif de calage de pas est configuré de manière à être relié à la source d'alimentation fluidique principale 32 et à alimenter les chambres 24a, 24b de l'actionneur du système de commande 14. A cet effet, le moyen d'alimentation fluidique 30 comporte plusieurs canalisations 34 pour alimenter le système de commande 14. Ces canalisations 34 sont avantageusement des canalisations haute pression. La pression qui circule dans chaque canalisation est de l'ordre de 120 bars. Le fluide haute pression qui circule dans les canalisations 34 est avantageusement une huile.

Le moyen d'alimentation fluidique 30 est configuré pour être couplé à un palier de transfert de fluide 40 de la turbomachine via des canalisations 34. Le palier de transfert de fluide 40 est configuré pour transférer le fluide (huile) sous pression de la source d'alimentation principale 32 (dans le repère fixe) vers chacune des chambres 24a, 24b du système de commande agencé dans le repère tournant de la turbomachine via le moyen d'alimentation 30. Le palier de transfert d'huile 40 de la turbomachine est couplé à la source d'alimentation principale 32 via d'autres canalisations 36.

En d'autres termes, afin d'optimiser l'espace, le dispositif de calage de la présente invention est monté dans le repère tournant de la turbomachine d'aéronef, tandis que la source d'alimentation principale 32 est montée dans le repère fixe. Le palier de transfert de fluide assure le transfert de fluide entre les éléments du repère fixe, notamment la source d'alimentation principale 32 et les éléments du repère tournant, notamment le moyen d'alimentation 30 du dispositif de calage.

Ce dispositif de transfert de fluide 40, de préférence de l'huile, est un raccord tournant ou joint tournant. Il comprend un organe fixe 42 solidaire de la structure fixe 4 et un organe mobile 44 solidaire du rotor 3. Ce dispositif de transfert de fluide 40 assure la transmission d'énergie hydraulique depuis l'organe fixe 42 vers l'organe mobile 44 de manière étanche. Il peut comprendre une ou plusieurs voies. Ainsi, au moins une canalisation 34 du moyen d'alimentation 30 raccorde l'organe mobile 44 du palier de transfert 40 et l'actionneur 16 et au moins une autre canalisation 36 raccorde l'organe fixe 42 du palier de transfert 40 à la source d'alimentation principale 32 de la turbomachine d'aéronef.

Selon les modes de réalisation illustrés sur les figures 1 à 6, le dispositif de calage de pas des pales comporte en outre un circuit d'alimentation auxiliaire 50 en fluide sous pression agencé dans le repère tournant et raccordé d'une part au moyen d'alimentation 30 et d'autre part à la source d'alimentation principale 32 par l'intermédiaire du palier de transfert 40 par des canalisations. Le circuit d'alimentation auxiliaire 50 est configuré pour recevoir temporairement du fluide sous pression de la source d'alimentation principale 32, c'est-à-dire lorsque cette dernière est active et que le palier de transfert de fluide 40 est opérationnel. Ainsi, dès que la source d'alimentation principale génère de la pression, le circuit d'alimentation auxiliaire se remplit et est prêt à être utilisé en cas de rupture de l'alimentation des chambres en fluide sous pression par la source d'alimentation principale.

En fonctionnement normal, le moyen d'alimentation 30 autorise le passage de fluide sous pression de la source d'alimentation principale 32 vers les chambres 24a, 24b du système de commande 14 de manière à régler le calage de pas des pales 5. En outre, le moyen d'alimentation 30 autorise le passage de fluide sous pression de la source d'alimentation principale 32 vers le circuit d'alimentation auxiliaire 50 via le palier de transfert 40.

En cas de rupture de l'alimentation des chambres 24a, 24b en fluide sous pression par la source d'alimentation principale 32, le moyen d'alimentation 30 est configuré pour autoriser le passage de fluide sous pression du circuit d'alimentation auxiliaire 50 vers les chambres 24a, 24b du système de commande de manière à entrainer la mise en drapeau des pales. Dans cette position, la deuxième chambre 24b a un volume fortement réduit par rapport à celui de la première chambre 24a. Une telle rupture de l'alimentation des chambres 24a, 24b en fluide sous pression par la source d'alimentation principale 32 peut être due soit à un problème de la source d'alimentation principale 32 elle-même soit à une défaillance du palier de transfert tournant 40.

Ainsi, pendant le fonctionnement normal, de l'énergie hydraulique est stockée dans le circuit d'alimentation auxiliaire 50. Celle-ci est déchargée vers au moins la première chambre 24a de l'actionneur en cas de perte hydraulique de la fonction principale d'actionnement, c'est-à-dire en cas de rupture de l'alimentation des chambres 24a, 24b en fluide sous pression par la source d'alimentation principale 32. L'énergie hydraulique étant stockée au plus près de l'actionneur, c'est-à-dire dans le repère tournant, la mise en drapeau des pales est assurée même en cas de casse du palier de transfert de fluide tournant. Le circuit d'alimentation auxiliaire 50 est autonome (ou indépendant) en énergie hydraulique en cas de rupture de l'alimentation des chambres 24a, 24b par la source d'alimentation principale 32. Autrement dit, au cours de cette phase, le circuit d'alimentation auxiliaire 50 ne reçoit pas d'énergie hydraulique en provenance du repère fixe.

A cet effet, le moyen d'alimentation 30 comporte avantageusement un distributeur à tiroir 52 agencé dans le repère tournant et commandé par une commande hydraulique 54 et un moyen de rappel 55, tel qu'un ressort. Le distributeur à tiroir 52 est raccordé au moyen de canalisations à la fois au palier de transfert de fluide 40, au circuit d'alimentation auxiliaire 50 et à au moins une des chambres 24 du système de commande 14.

Le distributeur à tiroir 52 peut occuper au moins deux positions : une première position A et une seconde position B.

Dans la première position A, le distributeur à tiroir 52 autorise le passage du fluide de la source d'alimentation principale 32 vers la ou chaque chambre 24 reliée au distributeur à tiroir 52 de manière à régler le calage de pas des pales 5. Dans cette position, le distributeur à tiroir 52 bloque également le passage du fluide du circuit d'alimentation auxiliaire 50 vers la ou chaque chambre reliée au distributeur à tiroir 52.

Dans la seconde position B, le distributeur à tiroir 52 bloque le passage du fluide de la source d'alimentation principale 32 en fluide vers la ou chaque chambre reliée au distributeur à tiroir 52 et autorise le passage du fluide du circuit de fluide auxiliaire 50 vers au moins une chambre reliée au distributeur à tiroir 52 de manière à entrainer la mise en drapeau des pales de l'hélice.

Le distributeur à tiroir 52 est maintenu dans sa première position A par la commande hydraulique 54 au moyen de fluide sous pression provenant de la source d'alimentation principale 32 par l'intermédiaire d'une des voies du palier de transfert 40 raccordée à la première chambre 24a du système de commande. Le moyen de rappel 55, tel qu'un ressort, est configuré pour solliciter le distributeur 52 dans la seconde position B. Tant que la pression de fluide dans la canalisation 34c reliant la voie du palier de transfert de fluide 40 à la première chambre 24a est supérieure à la force de rappel du ressort 55, le distributeur 52 est dans sa première position A et au moins la première chambre 24a de l'actionneur est alimentée par la source d'alimentation principale 32 par l'intermédiaire d'une voie de transfert du palier de transfert d'huile.

Le dispositif de calage comporte avantageusement une unité de contrôle 56 agencée dans le repère fixe et reliant la source d'alimentation principale 32 à deux voies du palier de transfert de fluide tournant 40, chacune raccordée à une des chambres 24a, 24b du système de commande 14. L'unité de contrôle 56 permet de réguler le débit du fluide sous pression destiné à chaque chambre de manière à régler le calage de pas des pales 5 en fonctionnement normal.

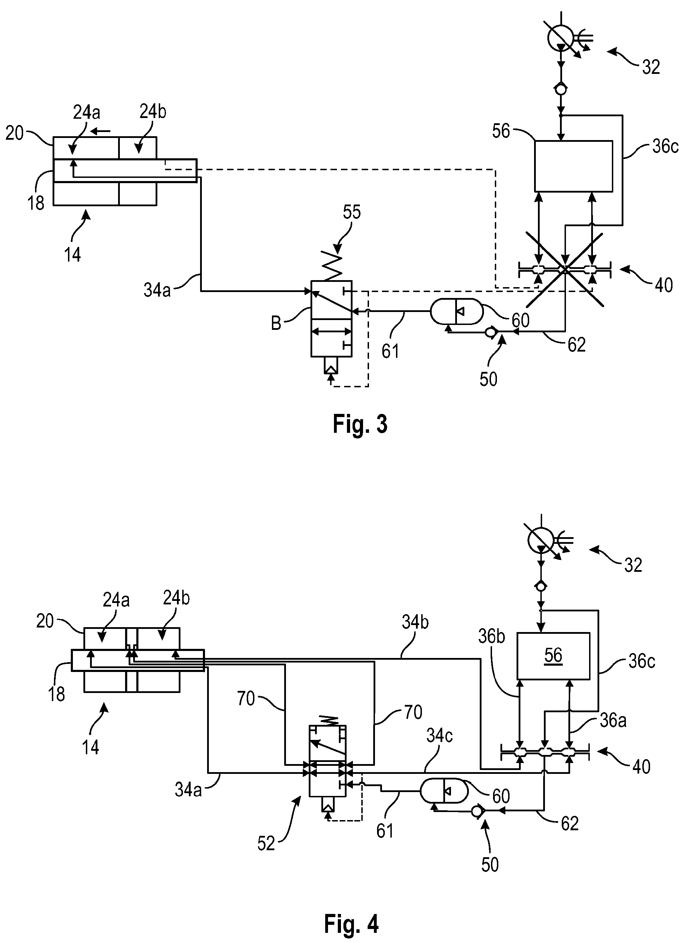

Selon un premier mode de réalisation illustré sur les figures 2 et 3, qui représente plus en détail le circuit de commande et d'alimentation en fluide sous pression des chambres 24a, 24b de l'actionneur hydraulique, le circuit d'alimentation auxiliaire 50 comporte un accumulateur 60 agencé dans le repère tournant et raccordé par une canalisation 61 au distributeur à tiroir 52 et par une autre canalisation 62 à une troisième voie de l'organe mobile 44 du palier de transfert 40. Une autre canalisation 36c raccorde la troisième voie de l'organe fixe 42 du palier de transfert à la source d'alimentation principale 32.

Cette troisième voie du palier de transfert de fluide 40 permet de transférer le fluide sous pression de la source d'alimentation principale 32 vers l'accumulateur 60 en fonctionnement normal.

Ainsi, dès que la source d'alimentation principale génère de la pression, l'accumulateur se remplit et est prêt à être utilisé en cas de rupture de l'alimentation des chambres en fluide sous pression par la source d'alimentation principale.

Avantageusement, un dispositif anti-retour 64, par exemple un clapet anti-retour, est monté sur la canalisation 62 raccordant l'accumulateur 60 et le palier de transfert de fluide 40. Ce dispositif anti-retour 64 permet avantageusement de ne pas vider le fluide contenu dans l'accumulateur dans le transfert d'huile tournant ou le système principal d'alimentation lorsque l'un de ces deux systèmes est en panne.

Selon le premier mode de réalisation illustré sur les figures 2 et 3, une canalisation 34b du moyen d'alimentation 30 relie directement la deuxième chambre 24b à une des voies de transfert du palier de transfert de fluide 40 contrôlée par l'unité de contrôle 56. Une autre canalisation 34a du moyen d'alimentation 30 relie la première chambre 24a, par l'intermédiaire du distributeur à tiroir 52, à une autre voie de transfert du palier de transfert 40, également contrôlée par l'unité de contrôle 56.

En fonctionnement normal, l'accumulateur 60 est rempli par la source d'alimentation principale 32 et stocke de l'énergie hydraulique.

En cas de rupture de l'alimentation des chambres 24a, 24b en fluide sous pression par la source d'alimentation principale 32, telle qu'illustrée sur la figure 3, le distributeur à tiroir 52 commute de la première position A à la deuxième position B dans laquelle l'accumulateur 60 du circuit d'alimentation auxiliaire 50 est raccordé à la première chambre 24a. L'énergie hydraulique stockée dans l'accumulateur est déchargée vers la première chambre 24a, tandis que la deuxième chambre 24b n'est plus alimentée en fluide entrainant la mise en drapeau des pales de l'hélice.

L'accumulateur est par exemple un réservoir de liquide sous pression, tel que de l'huile par exemple ici.

Avantageusement, ce mode de réalisation permet de restituer de l'énergie passive en cas de perte de pression d'huile d'actionnement. De plus, cette architecture est réutilisable plusieurs fois sans assistance particulière. En effet, si la baisse de pression d'actionnement n'est que temporaire, au retour de la haute pression, le distributeur à tiroir rebascule dans sa première position A et l'accumulateur 60 peut se recharger en fluide par la source d'alimentation principale 32 en prélevant une partie du débit de la pompe du système de calage de pas.

En outre, afin de faciliter son intégration, le circuit d'alimentation auxiliaire 50 peut comporter un ensemble d'accumulateurs hydrauliques judicieusement répartis dans le repère tournant.

La figure 4 illustre une architecture similaire à celle de la figure 2. Selon ce circuit de commande et d'alimentation en fluide sous pression des chambres 24a, 24b de l'actionneur, le moyen d'alimentation 30 comporte en outre une canalisation auxiliaire 70 reliant les deux chambres 24a, 24b entre elles par l'intermédiaire du distributeur à tiroir 52.

Le distributeur à tiroir 52 est alors configuré pour autoriser le passage du fluide de la deuxième chambre 24b à la première chambre 24a lorsqu'il est dans la première position A et bloquer le passage du fluide entre les deux chambres lorsqu'il est dans la seconde position B.

Cette canalisation auxiliaire 70 permet de faire circuler d'une chambre à l'autre un fluide réchauffé ou au contraire un fluide refroidi. La canalisation auxiliaire 70 permet de relier hydrauliquement les chambres 24a et 24b du vérin hydraulique. Ainsi, sous l'effet d'une différence de pression entre les deux chambres 24a, 24b, un flux d'huile s'établit dans la canalisation auxiliaire 70. Par conséquent, dans un cas où la position du vérin est stabilisée à un point fixe, cette canalisation auxiliaire 70 permet avantageusement de garantir une petite circulation de fluide malgré le fait que l'on n'ait pas de débit d'actionnement. Ce petit débit peut avantageusement permettre de refroidir ou chauffer l'huile du vérin.

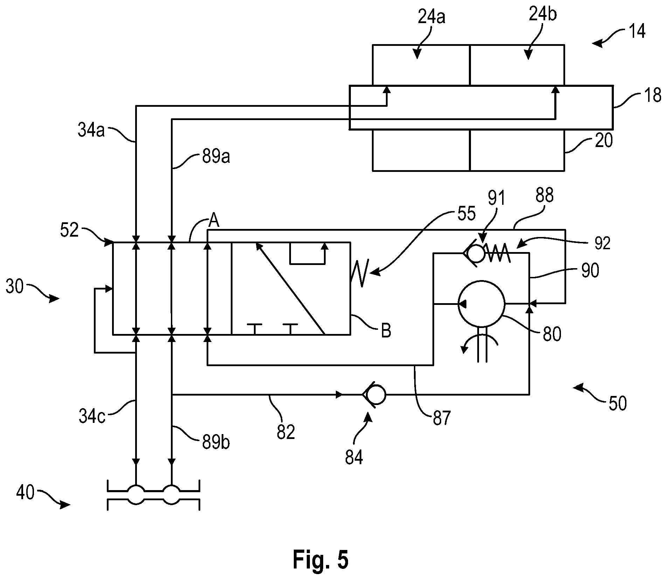

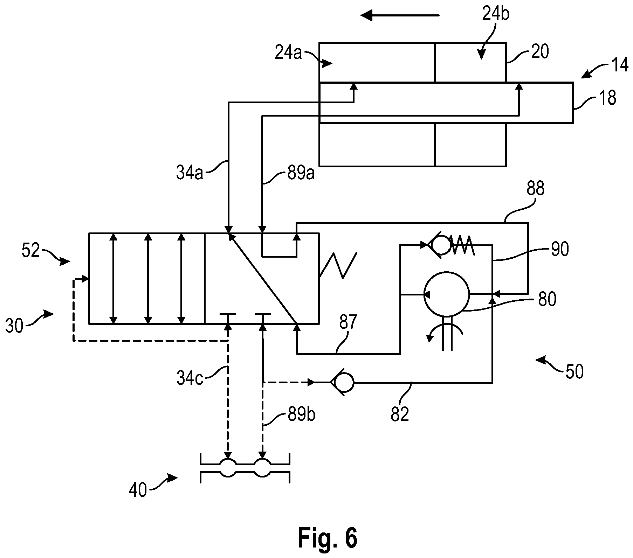

Selon un deuxième mode de réalisation illustré sur les figures 5 et 6, qui représentent plus en détail le circuit de commande et d'alimentation en fluide sous pression des chambres 24a, 24b de l'actionneur hydraulique, le circuit d'alimentation auxiliaire 50 comporte une pompe hydraulique 80 agencée dans le repère tournant.

Le circuit d'alimentation auxiliaire 50 comporte un canal de dérivation 82 raccordant une des voies de transfert du palier de transfert à l'entrée de la pompe hydraulique 80 et dans lequel est monté un dispositif anti-retour 84, par exemple un clapet anti-retour. Dans l'exemple illustré, le canal de dérivation 82 est raccordé à la voie raccordant la deuxième chambre 24b à la source d'alimentation principale 32 en cas de fonctionnement normal.

La sortie et l'entrée de la pompe hydraulique 80 sont en outre raccordées au distributeur à tiroir 52 respectivement par un premier conduit 87 et un deuxième conduit 88 du circuit d'alimentation auxiliaire 50.

En outre, la première chambre 24a et la deuxième chambre 24b sont raccordées à la source d'alimentation principale 32 par l'intermédiaire de deux voies du palier de transfert 40 via le distributeur à tiroir 52 en cas de fonctionnement normal. En effet, selon le mode de réalisation illustré sur les figures 5 et 6, la première chambre 24a est raccordée au distributeur à tiroir 52 par une canalisation 34a et le distributeur à tiroir 52 est raccordé par une autre canalisation 34c à une première voie du palier de transfert 40 (comme dans le premier mode de réalisation). En outre, dans ce deuxième mode de réalisation, la deuxième chambre 24b est également raccordée au palier de transfert 40, plus précisément à une deuxième voie de transfert, par l'intermédiaire du distributeur à tiroir 52, une canalisation 89a raccordant la deuxième chambre 24b au distributeur 52 et une autre canalisation 89b raccordant le distributeur 52 au palier de transfert 40. Selon ce deuxième mode de réalisation, le distributeur à tiroir 52 est configuré lorsqu'il est dans sa première position A, pour relier chaque chambre 24a, 24b à une voie de transfert du palier de transfert de fluide et pour relier la sortie de la pompe hydraulique 80 à son entrée.

Ainsi, au cours du fonctionnement normal, un partie du fluide destiné à la deuxième chambre 24b est prélevé temporairement jusqu'au remplissage du circuit d'alimentation auxiliaire 50 et notamment la canalisation 82, le premier conduit 87 et le deuxième conduit 88. La pompe hydraulique 80 assure la circulation du fluide du premier conduit 87 au deuxième conduit 88 par l'intermédiaire du distributeur à tiroir 52.

Lorsque le circuit d'alimentation auxiliaire 50 est plein d'huile, le circuit d'alimentation auxiliaire ne nécessite plus de prélèvement, le fluide circule en boucle entre le premier et le deuxième conduit 87, 88. Le fluide recirculé ne génère pas d'échauffement majeur car lorsque le système de remise en drapeau n'est pas utilisé, la perte de charge du circuit est très faible. En outre, la pompe hydraulique est agencée dans une zone relativement froide de la turbomachine, le compartiment fan.

En cas de rupture de l'alimentation des chambres en fluide sous pression par la source d'alimentation principale 32, le distributeur à tiroir 52 bascule de sa première position A à sa seconde position B, dans laquelle il raccorde respectivement la sortie de la pompe hydraulique 80 à la première chambre 24a et l'entrée de la pompe hydraulique 80 à la deuxième chambre 24b et autorise ainsi la pompe hydraulique 80 à transmettre le fluide de la deuxième chambre 24b à la première chambre 24a de manière à entrainer la mise en drapeau des pales de l'hélice. En effet, la deuxième chambre 24b est vidée au profit de la première chambre 24a entrainant la mise en drapeau des pales.

Le circuit d'alimentation auxiliaire 50 permet de stocker une énergie hydraulique d'actionnement durant le fonctionnement normal qui est restituée aux chambres de l'actionneur en cas de perte de la pression d'huile d'actionnement afin de garantir la mise en drapeau des pales.

Avantageusement, cette architecture ne nécessite pas d'ajout de voie supplémentaire au palier de transfert tournant et la pompe hydraulique peut être entrainée directement par l'arbre portant les pales dans le repère tournant permettant ainsi un gain de masse et d'encombrement.

Cette seconde architecture est également réutilisable plusieurs fois étant donné que la pompe hydraulique est continuellement entrainée en rotation.

Si une des chambres a un volume réduit par rapport à l'autre en fonctionnement normal, dans ce cas le circuit d'alimentation auxiliaire 50 comporte en outre un accumulateur hydraulique (non illustré) raccordé à la pompe hydraulique et ayant un volume sensiblement égal à la différence de volumes entre les deux chambres afin de stocker le fluide complémentaire nécessaire à la mise en drapeau des pales.

Avantageusement, le circuit d'alimentation auxiliaire 50 comporte un autre canal de dérivation 90 reliant directement l'entrée de la pompe hydraulique 80 à la sortie de la pompe hydraulique dans lequel est monté un dispositif anti-retour 91 comportant un organe d'ouverture et de fermeture du passage de fluide dans l'autre canal de dérivation 88 actionné par un ressort 92, l'ensemble formant un clapet de surpression pour garantir que la pression dans la pompe hydraulique 80 reste inférieure à un seuil déterminé et permettant de suivre la pression au cours du fonctionnement.

## Revendications

1. Dispositif de calage de pas de pales (5) pour turbomachine (1) d'aéronef. comprenant :
- un arbre (3) s'étendant selon un axe longitudinal (X) de la turbomachine, des pales (5) étant montées sur l'arbre (3),
- un mécanisme de liaison (12) relié aux pales de l'arbre ;
- un système de commande (14) agissant sur le mécanisme de liaison (12) et comportant un corps fixe (18) solidaire de l'arbre et un corps mobile (20) en translation selon l'axe longitudinal (X) par rapport audit corps fixe et séparant le corps fixe en deux chambres (24a, 24b) à volumes variables, le corps mobile étant relié au mécanisme de liaison ;
- un moyen d'alimentation (30) du système de commande configuré pour alimenter les chambres (24a, 24b) en fluide sous pression et pour être relié à une source d'alimentation principale (32) de la turbomachine en fluide sous pression agencée dans un repère fixe de la turbomachine, le moyen d'alimentation (30) étant configuré pour être couplé à un palier de transfert de fluide (40) configuré pour transférer le fluide sous pression de la source d'alimentation principale (32) vers chacune des chambres (24a, 24b) du système de commande agencé dans un repère tournant de la turbomachine via le moyen d'alimentation (30) ;
le dispositif de calage de pas étant **caractérisé en ce qu'**il comporte un circuit d'alimentation auxiliaire (50) en fluide sous pression agencé dans le repère tournant, relié au moyen d'alimentation (30) et configuré pour recevoir du fluide sous pression de la source d'alimentation principale (32) et **en ce que** le moyen d'alimentation (30) est configuré pour :
- en fonctionnement normal, autoriser le passage de fluide sous pression de la source d'alimentation principale (32) vers les chambres (24a, 24b) du système de commande de manière à régler le calage de pas des pales (5) et autoriser le passage de fluide sous pression de la source d'alimentation principale (32) vers le circuit d'alimentation auxiliaire (50), et
- en cas de rupture de l'alimentation des chambres en fluide sous pression par la source d'alimentation principale (32), autoriser le passage de fluide sous pression du circuit d'alimentation auxiliaire (50) vers les chambres (24a, 24b) du système de commande de manière à entrainer la mise en drapeau des pales, et
dans lequel le moyen d'alimentation (30) comporte un distributeur à tiroir (52) agencé dans le repère tournant et commandé par une commande hydraulique (54) et le distributeur à tiroir (52) étant configuré pour être relié au palier de transfert de fluide (40), et relié au circuit d'alimentation auxiliaire (50) et à au moins une des chambres (24a) du système de commande (14), le distributeur à tiroir pouvant occuper au moins deux positions :
- dans une première position (A), le distributeur à tiroir autorise le passage du fluide de la source d'alimentation principale (32) vers la ou chaque chambre reliée au distributeur à tiroir de manière à régler le calage de pas des pales et bloque le passage du fluide du circuit d'alimentation auxiliaire (50) vers la ou chaque chambre reliée au distributeur à tiroir ; et
- dans une seconde position (B), le distributeur à tiroir bloque le passage du fluide de la source d'alimentation principale (32) en fluide vers la ou chaque chambre reliée au distributeur à tiroir et autorise le passage du fluide du circuit d'alimentation auxiliaire (50) vers au moins une chambre reliée au distributeur à tiroir de manière à entrainer la mise en drapeau des pales.

2. Dispositif de calage de pas selon la revendication 1, dans lequel, en fonctionnement normal, le débit de fluide sous pression alimentant les chambres du système de commande est contrôlé par une unité de contrôle (56) agencée dans le repère fixe et reliant la source d'alimentation principale (32) au palier de transfert de fluide (40).

3. Dispositif de calage de pas selon la revendication 1 ou 2, dans lequel le circuit d'alimentation auxiliaire (50) comporte un accumulateur (60) agencé dans le repère tournant et configuré pour stocker du fluide provenant de la source d'alimentation principale (32) au cours du fonctionnement normal et, en cas de rupture de l'alimentation des chambres en fluide sous pression par la source d'alimentation principale (32), le moyen d'alimentation (30) est configuré pour décharger le fluide stocké dans l'accumulateur (60) vers une des chambres (24a) du système de commande de manière à entrainer la mise en drapeau des pales (5).

4. Dispositif de calage de pas selon la revendication 3, dans lequel le palier de transfert de fluide (40) comporte deux voies de transfert pour transférer le fluide sous pression de la source d'alimentation principale (32) vers chacune des chambres (24a, 24b) du système de commande et une troisième voie de transfert pour transférer temporairement le fluide sous pression de la source d'alimentation principale (32) vers l'accumulateur (60) en fonctionnement normal.

5. Dispositif de calage de pas selon la revendication 3 ou 4, dans lequel le moyen d'alimentation (30) comporte une canalisation (34b) reliant directement une des chambres (24b) à une voie de transfert du palier de transfert de fluide (40) et une autre canalisation (34a, 34c) reliant l'autre des chambres (24a) à une autre voie de transfert du palier de transfert (40) par l'intermédiaire du distributeur à tiroir (52).

6. Dispositif de calage de pas selon l'une des revendications 3 à 5, dans lequel le circuit d'alimentation auxiliaire (50) comporte un dispositif anti-retour (64), par exemple un clapet anti-retour, agencé entre l'accumulateur (60) et le palier de transfert de fluide (40).

7. Dispositif de calage de pas selon la revendication 1 ou 2, dans lequel le circuit d'alimentation auxiliaire (50) comporte une pompe hydraulique (80) agencée dans le repère tournant et configurée pour être reliée aux deux chambres (24a, 24b) en cas de rupture de l'alimentation des chambres en fluide sous pression par la source d'alimentation principale (32), et transmettre le fluide d'une chambre (24b) à l'autre (24a) de manière à entrainer la mise en drapeau des pales (5).

8. Dispositif de calage de pas selon la revendication 7, dans lequel une première des chambres a un volume réduit par rapport à l'autre en fonctionnement normal et dans lequel le circuit d'alimentation auxiliaire comporte un accumulateur hydraulique relié à la pompe hydraulique, l'accumulateur hydraulique ayant un volume sensiblement égal à la différence de volumes entre les deux chambres.

9. Dispositif de calage de pas selon l'une des revendications 7 ou 8, dans lequel le distributeur à tiroir (52) est configuré lorsqu'il est dans :
- la première position (A), pour relier chaque chambre à une voie de transfert du palier de transfert (40) de fluide et pour relier la sortie de la pompe hydraulique (80) à l'entrée de la pompe hydraulique ; et
- la seconde position (B), pour relier la sortie de la pompe hydraulique (80) à une des chambres (24a) et relier l'autre des chambres (24b) à l'entrée de la pompe hydraulique (80).

10. Dispositif de calage de pas selon la revendication 9, dans lequel le circuit d'alimentation auxiliaire (50) comporte un canal de dérivation (82) reliant une des voies de transfert du palier de transfert à l'entrée de la pompe hydraulique et dans lequel est monté un dispositif anti-retour (84), par exemple un clapet anti-retour.

11. Dispositif de calage de pas selon la revendication 9 ou 10, dans lequel le circuit d'alimentation auxiliaire (50) comporte un canal de dérivation (90) reliant directement l'entrée de la pompe hydraulique à la sortie de la pompe hydraulique dans lequel est monté un dispositif anti-retour (91) comportant un organe d'ouverture et de fermeture du passage de fluide dans la conduite de dérivation actionné par un ressort (92).

12. Dispositif de calage de pas selon l'une des revendications précédentes , dans lequel le moyen d'alimentation (30) comporte une canalisation auxiliaire (70) reliant les deux chambres (24a, 24b) du système de commande, le distributeur à tiroir (52) étant configuré pour autoriser le passage du fluide d'une chambre (24b) à l'autre (24a) lorsqu'il est dans la première position (A) et bloquer le passage du fluide d'une chambre à l'autre lorsqu'il est dans la seconde position (B).

13. Turbomachine (1) d'aéronef comportant une hélice ou une soufflante comprenant des pales à calage variable et un dispositif de calage (10) de pas des pales selon l'une des revendications précédentes, la turbomachine étant de préférence un turboréacteur à soufflante variable ou un turbopropulseur à hélice variable.

## Patentansprüche

1. Blattverstellungsvorrichtung (5) für Turbotriebwerk (1) eines Luftfahrzeugs, umfassend:
- eine Welle (3), die sich entlang einer Längsachse (X) des Turbotriebwerks erstreckt, wobei die Blätter (5) auf der Welle (3) angebracht sind,
- einen Verbindungsmechanismus (12), der mit den Blättern der Welle verbunden ist;
- ein Steuerungssystem (14), das auf den Verbindungsmechanismus (12) einwirkt und einen festen Körper (18), der fest mit der Welle verbunden ist, und einen beweglichen Körper (20) umfasst, der in Bezug auf den festen Körper entlang der Längsachse (X) verschiebbar ist und den festen Körper in zwei Kammern (24a, 24b) mit variablem Volumen abtrennt, wobei der bewegliche Körper mit dem Verbindungsmechanismus verbunden ist;
- ein Versorgungsmittel (30) des Steuerungssystems, das konfiguriert ist, um die Kammern (24a, 24b) mit druckbeaufschlagtem Fluid zu versorgen und um mit einer Hauptversorgungsquelle (32) des Turbotriebwerks mit druckbeaufschlagtem Fluid verbunden zu werden, die an einer festen Stelle des Turbotriebwerks eingerichtet ist, wobei das Versorgungsmittel (30) konfiguriert ist, um mit einem Fluidübertragungslager (40) gekoppelt zu werden, das konfiguriert ist, um das druckbeaufschlagte Fluid über das Versorgungsmittel (30) von der Hauptversorgungsquelle (32) zu jeder der Kammern (24a, 24b) des an einer drehenden Stelle des Turbotriebwerks eingerichteten Steuerungssystems zu übertragen,
wobei die Blattverstellungsvorrichtung **dadurch gekennzeichnet ist, dass** sie einen an der drehenden Stelle eingerichteten Hilfsversorgungskreis (50) für druckbeaufschlagtes Fluid umfasst, der mit dem Versorgungsmittel (30) verbunden ist und konfiguriert ist, um das druckbeaufschlagte Fluid von der Hauptversorgungsquelle (32) aufzunehmen, und dadurch, dass das Versorgungsmittel (30) konfiguriert ist zum:
- im normalen Betrieb, Ermöglichen des Durchgangs von druckbeaufschlagtem Fluid von der Hauptversorgungsquelle (32) zu den Kammern (24a, 24b) des Steuerungssystems derart, dass die Blattverstellung (5) reguliert wird, und Ermöglichen des Durchgangs von druckbeaufschlagtem Fluid von der Hauptversorgungsquelle (32) zum Hilfsversorgungskreis (50), und
- im Falle eines Ausfalls der Versorgung der Kammern mit druckbeaufschlagtem Fluid durch die Hauptversorgungsquelle (32), Ermöglichen des Durchgangs von druckbeaufschlagtem Fluid vom Hilfsversorgungskreis (50) zu den Kammern (24a, 24b) des Steuerungssystems derart, dass die Blätter in Fahnenstellung versetzt werden, und
wobei das Versorgungsmittel (30) ein Schieberventil (52) umfasst, das an der drehenden Stelle eingerichtet ist und von einer Hydrauliksteuerung (54) gesteuert wird, und wobei das Schieberventil (52) konfiguriert ist, um mit dem Fluidübertragungslager (40) verbunden zu werden und mit dem Hilfsversorgungskreis (50) und mit mindestens einer der Kammern (24a) des Steuerungssystems (14) verbunden zu werden, wobei das Schieberventil mindestens zwei Positionen einnehmen kann:
- in einer ersten Position (A) ermöglicht das Schieberventil den Durchgang des Fluids von der Hauptversorgungsquelle (32) zu der oder jeder Kammer, die mit dem Schieberventil verbunden ist, derart, dass die Blattverstellung reguliert wird, und blockiert den Durchgang des Fluids vom Hilfsversorgungskreis (50) zu der oder jeder Kammer, die mit dem Schieberventil verbunden ist; und
- in einer zweiten Position (B) blockiert das Schieberventil den Durchgang des Fluids von der Fluid-Hauptversorgungsquelle (32) zu der oder jeder Kammer, die mit dem Schieberventil verbunden ist, und ermöglicht den Durchgang des Fluids vom Hilfsversorgungskreis (50) zu mindestens einer Kammer, die mit dem Schieberventil verbunden ist, derart, dass die Blätter in Fahnenstellung versetzt werden.

2. Blattverstellungsvorrichtung nach Anspruch 1, wobei im normalen Betrieb der Durchsatz von druckbeaufschlagtem Fluid, das die Kammern des Steuerungssystems versorgt, von einer Kontrolleinheit (56) kontrolliert wird, die an der festen Stelle eingerichtet ist und die Hauptversorgungsquelle (32) mit dem Fluidübertragungslager (40) verbindet.

3. Blattverstellungsvorrichtung nach Anspruch 1 oder 2, wobei der Hilfsversorgungskreis (50) einen Akkumulator (60) umfasst, der an der drehenden Stelle eingerichtet ist und konfiguriert ist, um das von der Hauptversorgungsquelle (32) stammende Fluid im Verlauf des normalen Betriebs zu lagern, und im Falle eines Ausfalls der Versorgung der Kammern mit druckbeaufschlagtem Fluid durch die Hauptversorgungsquelle (32) das Versorgungsmittel (30) konfiguriert ist, um das im Akkumulator gelagerte Fluid (60) zu einer der Kammern (24a) des Steuerungssystems derart zu entladen, dass die Blätter (5) in Fahnenstellung versetzt werden.

4. Blattverstellungsvorrichtung nach Anspruch 3, wobei das Fluidübertragungslager (40) zwei Übertragungswege zum Übertragen des druckbeaufschlagten Fluids von der Hauptversorgungsquelle (32) zu jeder der Kammern (24a, 24b) des Steuerungssystems und einen dritten Übertragungsweg zum vorübergehenden Übertragen des druckbeaufschlagten Fluids von der Hauptversorgungsquelle (32) zum Akkumulator (60) im normalen Betrieb umfasst.

5. Blattverstellungsvorrichtung nach Anspruch 3 oder 4, wobei das Versorgungsmittel (30) ein Rohr (34b) umfasst, das eine der Kammern (24b) direkt mit einem Übertragungsweg des Fluidübertragungslagers (40) verbindet, und ein anderes Rohr (34a, 34c), das die andere der Kammern (24a) mittels des Schieberventils mit einem anderen Übertragungsweg des Übertragungslagers (40) verbindet.

6. Blattverstellungsvorrichtung nach einem der Ansprüche 3 bis 5, wobei der Hilfsversorgungskreis (50) eine Rücklaufsperrvorrichtung (64), zum Beispiel ein Rückschlagventil, umfasst, die zwischen dem Akkumulator (60) und dem Fluidübertragungslager (40) eingerichtet ist.

7. Blattverstellungsvorrichtung nach Anspruch 1 oder 2, wobei der Hilfsversorgungskreis (50) eine Hydraulikpumpe (80) umfasst, die an der drehenden Stelle eingerichtet ist und konfiguriert ist, um mit den zwei Kammern (24a, 24b) im Falle eines Ausfalls der Versorgung der Kammern mit druckbeaufschlagtem Fluid durch die Hauptversorgungsquelle (32) verbunden zu werden und das Fluid von einer Kammer (24b) zur anderen (24a) derart weiterzuleiten, dass die Blätter (5) in Fahnenstellung versetzt werden.

8. Blattverstellungsvorrichtung nach Anspruch 7, wobei eine erste der Kammern in Bezug auf die andere im normalen Betrieb ein verringertes Volumen aufweist und wobei der Hilfsversorgungskreis einen Hydraulikakkumulator umfasst, der mit der Hydraulikpumpe verbunden ist, wobei der Hydraulikakkumulator ein Volumen aufweist, das im Wesentlichen gleich der Differenz der Volumen zwischen den zwei Kammern ist.

9. Blattverstellungsvorrichtung nach Anspruch 7 oder 8, wobei das Schieberventil (52) konfiguriert ist, um, wenn es:
- in der ersten Position (A) ist, jede Kammer mit einem Übertragungsweg des Fluidübertragungslagers (40) zu verbinden und um den Ausgang der Hydraulikpumpe (80) mit dem Eingang der Hydraulikpumpe zu verbinden; und
- in der zweiten Position (B) ist, den Ausgang der Hydraulikpumpe (80) mit einer der Kammern (24a) zu verbinden und die andere der Kammern (24b) mit dem Eingang der Hydraulikpumpe (80) zu verbinden.

10. Blattverstellungsvorrichtung nach Anspruch 9, wobei der Hilfsversorgungskreis (50) eine Abzweigleitung (82) umfasst, die einen der Übertragungswege des Übertragungslagers mit dem Eingang der Hydraulikpumpe verbindet und in der eine Rücklaufsperrvorrichtung (84), zum Beispiel ein Rückschlagventil, angebracht ist.

11. Blattverstellungsvorrichtung nach Anspruch 9 oder 10, wobei der Hilfsversorgungskreis (50) eine Abzweigleitung (90) umfasst, die den Eingang der Hydraulikpumpe direkt mit dem Ausgang der Hydraulikpumpe verbindet und in der eine Rücklaufsperrvorrichtung (91) angebracht ist, die ein Öffnungs- und Schließorgan für den Durchgang von Fluid in der Abzweigleitung umfasst, das von einer Feder (92) betätigt wird.

12. Blattverstellungsvorrichtung nach einem der vorstehenden Ansprüche, wobei das Versorgungsmittel (30) ein Hilfsrohr (70) umfasst, das die zwei Kammern (24a, 24b) des Steuerungssystems verbindet, wobei das Schieberventil (52) konfiguriert ist, um den Durchgang des Fluids von einer Kammer (24b) zur anderen (24a) zu ermöglichen, wenn es in der ersten Position (A) ist, und den Durchgang des Fluids von einer Kammer zur anderen zu blockieren, wenn es in der zweiten Position (B) ist.

13. Turbotriebwerk (1) eines Luftfahrzeugs, umfassend einen Propeller oder ein Gebläse, umfassend Blätter mit variabler Feststellposition und eine Blattverstellungsvorrichtung (10) nach einem der vorstehenden Ansprüche, wobei das Turbotriebwerk vorzugsweise ein Turbostrahltriebwerk mit variablem Gebläse oder ein Turboprop-Triebwerk mit variablem Propeller ist.

## Claims

1. A pitch setting device (10) of blades (5) for a turbine engine (1) for aircraft, comprising:
- a shaft (3) extending along a longitudinal axis (X) of the turbine engine, blades (5) being mounted on the shaft (3),
- a connection mechanism (12) connected to the blades of the shaft;
- a control system (14) acting on the connection mechanism (12) and comprising a stationary body (18) secured to the shaft and a movable body (20) in translation along the longitudinal axis (X) with respect to said stationary body and separating the stationary body into two chambers (24a, 24b) of variable volume, the movable body being connected to the connection mechanism;
- a supply means (30) of the control system configured to supply the chambers (24a, 24b) with pressurised fluid and to be connected to a main supply source (32) of the turbine engine with pressurised fluid arranged in a stationary reference frame of the turbine engine,
the supply means (30) being configured to be coupled to a fluid transfer bearing (40) configured to transfer the pressurised fluid from the main supply source (32) towards each of the chambers (24a, 24b) of the control system arranged in a rotating reference frame of the turbine engine via the supply means (30);
the pitch setting device being **characterised in that** it comprises an auxiliary supply circuit (50) with pressurised fluid arranged in the rotating reference frame, connected to the supply means (30) and configured to receive pressurised fluid from the main supply source (32) and **in that** the supply means (30) is configured to:
- in normal operation, allows the passage of pressurised fluid from the main supply source (32) towards the chambers (24a, 24b) of the control system so as to adjust the pitch setting of the blades (5) and to allow the passage of pressurised fluid from the main supply source (32) towards the auxiliary supply circuit (50), and
- in the event of a break in the supply of pressurised fluid to the chambers from the main supply source (32), allows the passage of pressurised fluid from the auxiliary supply circuit (50) towards the chambers (24a, 24b) of the control system so as to cause the blades to feather, and
wherein the supply means (30) comprises a sliding valve (52) arranged in the rotating reference frame and controlled by a hydraulic control (54) and the sliding valve (52) being connected to the fluid transfer bearing (40), to the auxiliary supply circuit (50) and to at least one of the chambers (24a) of the control system (14), the sliding valve being able to occupy at least two positions:
- in a first position (A), the sliding valve allows the passage of the fluid from the main supply source (32) towards the or each chamber connected to the sliding valve so as to adjust the setting of the pitch of the blades and blocks the passage of the fluid from the auxiliary supply circuit (50) towards the or each chamber connected to the sliding valve; and
- in a second position (B), the sliding valve blocks the passage of the fluid from the main supply source (32) with fluid towards the or each chamber connected to the sliding valve and allows the passage of the fluid from the auxiliary supply circuit (50) towards at least one chamber connected to the sliding valve so as to cause the blades to feather.

2. The pitch setting device of claim 1, wherein, in normal operation, the flow rate of pressurised fluid supplying the chambers of the control system is controlled by a control unit (56) arranged in the stationary reference frame and connecting the main supply source (32) to the fluid transfer bearing (40).

3. The pitch setting device according to claim 1 or 2, wherein the auxiliary supply circuit (50) comprises an accumulator (60) arranged in the rotating reference frame and configured to store the fluid from the main supply source (32) during normal operation and, in the event of a break in the supply of pressurised fluid to the chambers from the main supply source (32), the supply means (30) is configured to discharge the fluid stored in the accumulator (60) towards one of the chambers (24a) of the control system so as to cause the blades (5) to feather.

4. The pitch setting device of claim 3, wherein the fluid transfer bearing (40) comprises two transfer ways for transferring pressurised fluid from the main supply source (32) towards each of the chambers (24a, 24b) of the control system and a third transfer way for temporarily transferring pressurised fluid from the main supply source (32) towards the accumulator (60) in normal operation.

5. The pitch setting device as claimed in claim 3 or 4, wherein the supply means (30) comprises a pipe (34b) directly connecting one of the chambers (24b) to a transfer way of the fluid transfer bearing (40) and another pipe (34a, 34c) connecting the other of the chambers (24a) to another transfer way of the transfer bearing (40) by means of the sliding valve (52).

6. The pitch setting device according to one of claims 3 to 5, wherein the auxiliary supply circuit (50) comprises a non-return device (64), for example a non-return valve, arranged between the accumulator (60) and the fluid transfer bearing (40).

7. The pitch setting device according to claim 1 or 2, wherein the auxiliary supply circuit (50) comprises a hydraulic pump (80) arranged in the rotating reference frame and configured to be connected to the two chambers (24a, 24b) in the event of a break in the supply of pressurised fluid to the chambers by the main supply source (32), and to transmit the fluid from one chamber (24b) to the other (24a) so as to cause the blades (5) to feather.

8. The pitch setting device of claim 7, wherein a first of the chambers has a reduced volume relative to the other in normal operation and wherein the auxiliary supply circuit comprises a hydraulic accumulator connected to the hydraulic pump, the hydraulic accumulator having a volume substantially equal to the difference in volumes between the two chambers.

9. The pitch setting device according to one of claims 7 or 8, wherein the sliding valve (52) is configured when in:
- the first position (A), to connect each chamber to a transfer way of the fluid transfer bearing (40) and to connect the outlet of the hydraulic pump (80) to the inlet of the hydraulic pump; and
- the second position (B), to connect the outlet of the hydraulic pump (80) to one of the chambers (24a) and to connect the other of the chambers (24b) to the inlet of the hydraulic pump (80).

10. The pitch setting device according to claim 9, wherein the auxiliary supply circuit (50) comprises a bypass channel (82) connecting one of the transfer ways of the transfer bearing to the inlet of the hydraulic pump and in which a non-return device (84), for example a non-return valve, is mounted.

11. The pitch setting device according to claim 9 or 10, wherein the auxiliary supply circuit (50) comprises a bypass channel (90) directly connecting the inlet of the hydraulic pump to the outlet of the hydraulic pump, in which is mounted a non-return device (91) comprising a member for opening and closing the fluid passage in the bypass conduit, actuated by a spring (92).

12. The pitch setting device according to one of the preceding claims, wherein the supply means (30) comprises an auxiliary pipe (70) connecting the two chambers (24a, 24b) of the control system, the sliding valve (52) being configured to allow the passage of the fluid from one chamber (24b) to the other (24a) when it is in the first position (A) and to block the passage of the fluid from one chamber to the other when it is in the second position (B).

13. A turbine engine (1) for aircraft comprising a propeller or a fan comprising variable pitch blades and a pitch setting device (10) of the blades according to one of the preceding claims, the turbine engine preferably being a variable fan turbojet engine or a variable propeller turboprop engine.
